# EUROPÄISCHE PATENTSCHRIFT

(11) **EP 1 448 283 B1**
(45) Veröffentlichungstag und Bekanntmachung des Hinweises auf die Patenterteilung: **22.02.2006**
(21) Anmeldenummer: 02803001.3
(22) Anmeldetag: 08.11.2002
(51) Int. Cl.: B01D 9/00, C07C 51/43, C07C 51/47, C07C 57/04

(54) **VERFAHREN ZUM REINIGENDEN ABTRENNEN VON KRISTALLEN AUS IHRER SUSPENSION IN MUTTERLAUGE**
METHOD FOR PERFORMING THE PURIFYING SEPARATION OF CRYSTALS OUT OF THEIR SUSPENSION IN A MOTHER LIQUOR
PROCEDE DE SEPARATION EPURATRICE DE CRISTAUX DE LEUR SUSPENSION DANS DE L'EAU MERE

(30) Priorität: 15.11.2001 DE 10156016; 24.05.2002 DE 10223058
(43) Veröffentlichungstag der Anmeldung: 25.08.2004
(73) Patentinhaber: BASF Aktiengesellschaft, 67056 Ludwigshafen (DE)
(72) Erfinder: HAMMON, Ulrich, 68163 Mannheim (DE); BAUMANN, Dieter, 67227 Frankenthal (DE); HEILEK, Jörg, 69245 Bammental (DE); MÜLLER-ENGEL, Klaus, Joachim, 76297 Stutensee (DE); ECK, Bernd, 68519 Viernheim (DE)
(86) Internationale Anmeldenummer: PCT/EP2002/012497
(87) Internationale Veröffentlichungsnummer: WO 2003/041832

(56) Entgegenhaltungen:
- WO-A-01/77056
- CH-A- 535 058
- US-A- 4 279 130
- US-A- 4 597 768
- US-A- 4 632 809
- JANSENS ET AL.: "The purification process in hydraulic packed-bed wash columns" CHEMICAL ENGINEERING SCIENCE, Bd. 50, Nr. 17, 25. September 1995 (1995-09-25), Seiten 2717-2729, XP002228443 in der Anmeldung erwähnt

## Beschreibung

Vorliegende Erfindung betrifft ein Verfahren zum reinigenden Abtrennen von Kristallen aus ihrer Suspension in Mutterlauge, bei dem
- die Suspension einer Waschkolonne zugeführt wird, die eine Wand aufweist, welche einen Prozessraum umhüllt,
- unter Zurückhaltung der Kristalle und unter Ausbildung eines Kristallbetts im Prozessraum aus der in den Prozessraum geführten Suspension Mutterlauge aus dem Prozessraum abgegeben wird,
- das Kristallbett im Prozessraum gefördert wird,
- im Prozessraum in die Förderrichtung des Kristallbetts wenigstens eine von der Gravitation verschiedene Kraft wirkt, die das Kristallbett im Prozessraum fördert, und
- im Prozessraum im Gegenstrom zum Kristallbett aus aufgeschmolzenen und nach dem Verfahren reinigend abgetrennten Kristallen bestehende Reinschmelze so geführt wird, daß sich im Kristallbett eine Waschfront ausbildet, die das Kristallbett in eine Mutterlaugenzone und in eine Reinschmelzezone aufteilt.

Der Begriff Mutterlauge soll in dieser Schrift so verstanden werden, dass er Schmelzen aus der zu kristallisierenden Komponente und Verunreinigungen und/oder Lösungen aus der zu kristallisierenden Komponente und Lösungsmitteln beziehungsweise Lösungsmittelgemischen sowie Verunreinigungen umfaßt. Dabei soll die zu kristallisierende Komponente, im Unterschied von z.B. Aufkonzentrierungsverfahren wässriger Fruchtsäfte, beim erfindungsgemäßen Verfahren stets das reindarzustellende Ziel- und Wertprodukt sein.

Insbesondere betrifft vorliegende Erfindung die reinigende Abtrennung von Acrylsäurekristallen aus deren Suspension in verunreinigter Acrylsäure.

Die nummerischen Adressen in dieser Schrift beziehen sich stets auf die dieser Schrift beiliegenden Figuren.

Gattungsgemäße Verfahren sind bekannt (vgl. z.B. EP-A 83463, DE-A 10017903, DE-A 10036881, DE-A 10036880, EP-A 97405, DE-A 10017903, WO-0177056, EP-A 398437, EP-A 98637, EP-A 305316, US-A 3872009 und der US-A 3777892).

Es schließt sich in der Regel an eine Suspensionskristallisation an, die ein sehr wirksames und kostengünstiges Verfahren bildet, um eine hohe Reinheit einer gewünschten chemischen Verbindung zu erzielen. Dabei macht man sich zunutze, daß beim Wachstum der Kristalle in einer Flüssigkeit Verunreinigungen weitgehend aus dem Kristallgitter verdrängt werden und in der Mutterlauge zurückbleiben. Bereits in einem einstufigen Kristallisationsprozess erhält man daher hochreine Kristalle der gewünschten Verbindung. Bei Bedarf kann die Suspensionskristallisation mehrstufig durchgeführt werden.

Ein entscheidender Schritt, der die Reinheit des kristallisierten Zielproduktes maßgeblich beeinflußt, ist dabei die Abtrennung der hochreinen Kristalle von ihrer Mutterlauge, die die Verunreinigungen in angereicherter Form und die nicht kristallisierten Anteile des Zielproduktes enthält, durch einen Fest/Flüssig-Trennprozeß. Dieser Trennprozeß kann mehrstufig ablaufen, wobei zumindest in der letzten Stufe oft eine sogenannte Waschkolonne verwendet wird. Die Waschkolonne kann aber auch die einzige Trennstufe bilden. Ihr kommt im wesentlichen die Aufgabe zu, die vergleichsweise reine Kristallphase von der vergleichsweise verunreinigten Mutterlauge zu trennen.

Waschkolonnen sind aus dem vorgenannten Stand der Technik ebenfalls bekannt. Sie umfassen eine, in der Regel zylindrische, Wand, die einen Prozessraum begrenzt. Dem Prozessraum vorgelagert ist häufig ein Verteilerraum, in den die in der Waschkolonne aufzutrennende Kristallsuspension zugeführt wird. Auf ihrem Weg vom Verteilerraum in den Prozessraum wird die Kristallsuspension weitgehend gleichmäßig über den Querschnitt des Prozessraums verteilt. Im Prozessraum wird durch Mutterlaugenentzug ein dichteres Kristallbett erzeugt und dieses durch den Prozessraum gefördert (dies kann von oben nach unten oder von unten nach oben erfolgen). Eine Schmelze aus den aufgeschmolzenen Kristallen selbst wird im Gegenstrom als Waschflüssigkeit durch das Kristallbett geleitet.

Zur Ausbildung eines Kristallbetts kommen prinzipiell unterschiedliche Methoden in Betracht. Bei gravitativ arbeitenden Waschkolonnen wird die Kristallsuspension von oben in die Kolonne eingeführt, das Kristallbett bildet sich in einem Sedimentationsprozess aus und seine Förderung in die Förderrichtung erfolgt nur durch die Einwirkung der Schwerkraft.

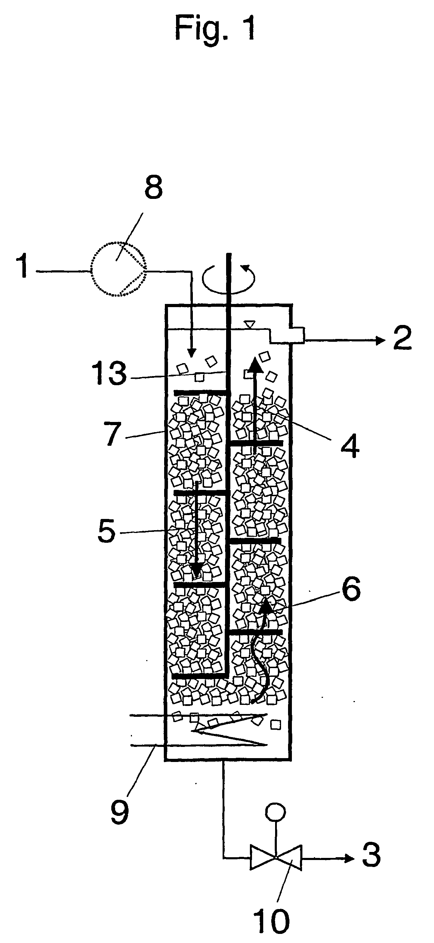

Die Verwendung derartiger Kolonnen ist vom erfindungsgemäßen Verfahren ausgenommen, da sich in ihnen im Regelfall keine definierte Waschfront ausbildet. Letzteres insbesondere dann, wenn sie auf einem Teil ihrer Höhe mit einem Rührwerk versehen sind (vgl. Figur 1).

Das erfindungsgemäße Verfahren ist demzufolge auf Verfahren in Waschkolonnen mit erzwungener Förderung des Kristallbetts beschränkt (eine ausführliche Beschreibung der unterschiedlichen Waschkolonnentypen findet sich u.a. in Chem.-Ing.-Techn. 57 (1985) Nr. 291-102, in Chemical Engineering Science Bd. 50, Nr. 17, S. 2712 bis 2729, 1995, Elsevier Science Ltd., in Applied Thermal Engineering Bd. 17, Nr. 8-10, S. 879-888, 1997, Verlag Elsevier Science Ltd. und in den in den vorgenannten Literaturstellen aufgeführten Literaturzitaten).

Waschkolonnen mit erzwungenem Transport (bzw. Förderung) des Kristallbetts sind dadurch gekennzeichnet, daß in die Förderrichtung (bzw. Transportrichtung) des Kristallbetts eine von der Gravitation verschiedene fördernd wirkende Kraft wirkt.

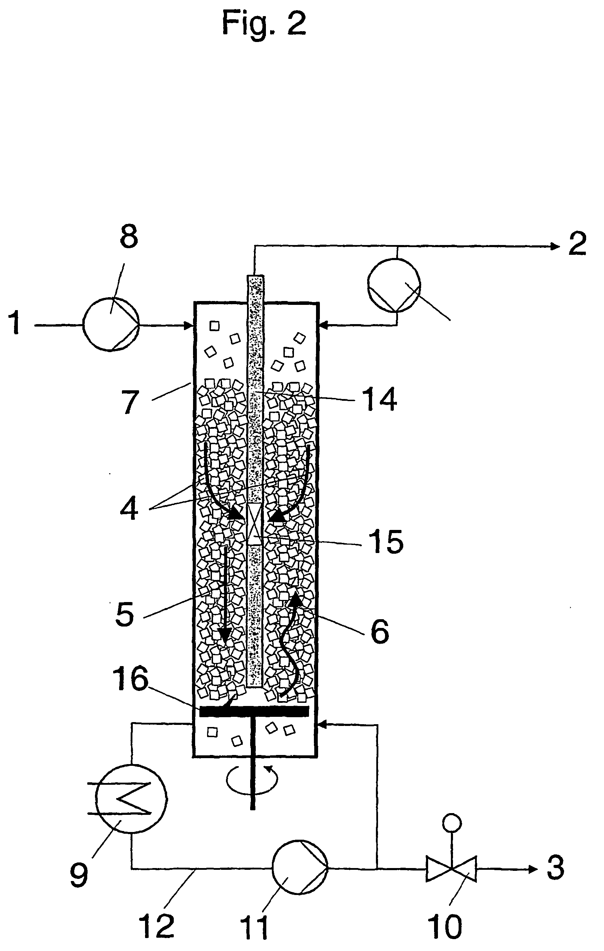

Prinzipiell unterscheidet man Waschkolonnen mit erzwungenem Transport des Kristallbetts in Druckkolonnen (auch hydraulische Waschkolonnen oder Hydraulikkolonnen genannt) und in mechanische Kolonnen. Bei den Druckkolonnen wird die Kristallsuspension in eine unter Druck stehende Waschkolonne gefördert (z.B. durch Pumpen und/oder hydrostatische Höhe). Die durch den Zuführkolonnendruck aufgeprägte Flüssigkeitsströmung sorgt dann für eine Kompaktierung der Kristalle zu einem Kristallbett (vgl. Fig. 2) sowie für dessen Förderung (der hydraulische Druck beträgt üblicherweise 0,1 bis 10 bar, häufig 1 bis 5 bar). Die Mutterlauge strömt in der Regel über Filter aus der Waschkolonne ab (jenseits der Filter kann Normaldruck, Unterdruck oder überatmosphärischer Druck herrschen). Die Rückführung eines Teils der Mutterlauge ermöglicht die Regelung der Transportkraft (Steuerstrom).

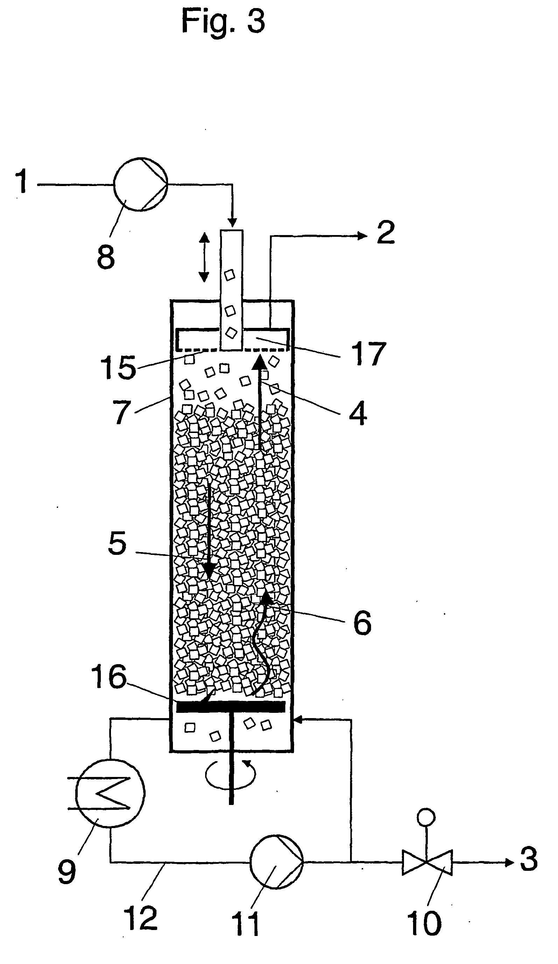

Mechanische Waschkolonnen enthalten im Unterschied dazu eine mechanische Zwangsfördereinrichtung für die Kristalle. Dies kann im einfachsten Fall ein semipermeabler Stempel sein, der für die Mutterlauge durchlässig aber für die Kristalle in der zugeführten Suspension undurchlässig ist (vgl. Fig. 3) und durch dessen Verschiebung der Druck zur Verdichtung und Förderung der Kristallbetts erzeugt wird.

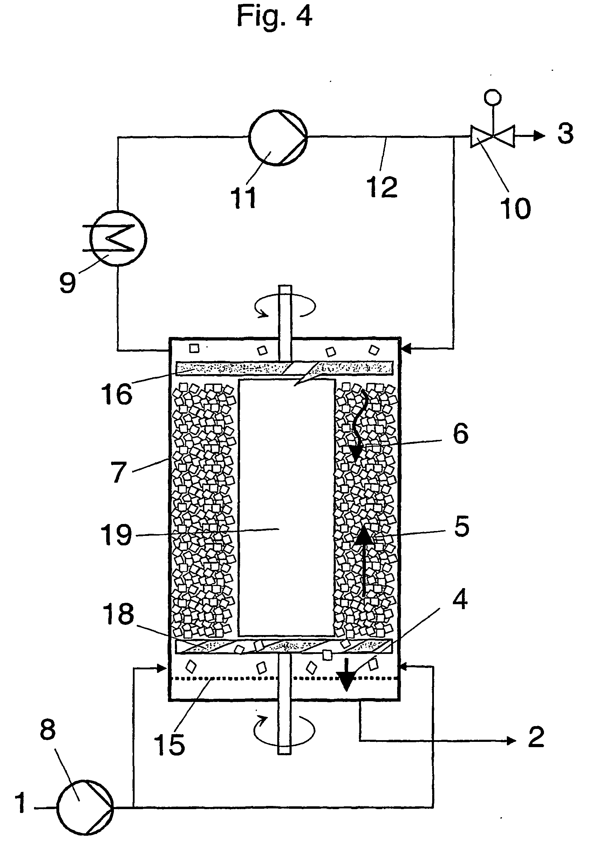

Die Verdichtung zu einem Kristallbett und dessen Förderung kann aber auch durch Abtrennung der Mutterlauge über Filter und mechanischen Transport der Kristalle vom Filter zum Kristallbett durch ein rotierendes Förderelement (z.B. Schnecken, Rührer, Wendeln oder Spiralen) erfolgen (vgl. Fig. 4).Die Filter können dabei auch in die rotierenden Förderelemente integriert sein. Jenseits des Mutterlaugenauslasses kann auch hier wieder Normaldruck, Unterdruck oder überatmosphärischer Druck herrschen.

Das Kristallbett weist bei den erfindungsgemäß zu verwendenden Waschkolonnen mit erzwungenem Transport des Kristallbetts eine sogenannte Aufbaufront auf, an der sich kontinuierlich Kristalle der eingeleiteten Kristallpension anlagern. Die Aufbaufront bezeichnet also den Übergang von der Suspension zum Kristallbett und ist durch einen relativ abrupten Anstieg des Kristallgehalts in der Suspension gekennzeichnet. Bei hydraulischen Waschkolonnen wird diese Aufbaufront auch als Filtrationsfront bezeichnet.

An dem der Aufbaufront gegenüber liegenden Ende des Kristallbetts ist meist eine Art Rotormesser (z.B. geschlitzte rotierende Messerscheibe) oder Schaber angeordnet, der kontinuierlich Kristalle vom Kristallbett abträgt. Durch die kontinuierliche Anlagerung von Kristallen an der Aufbaufront einerseits und das kontinuierliche Abtragen von Kristallen an dem der Aufbaufront gegenüberliegenden Ende des Kristallbetts andererseits, wird die Transportrichtung des Kristallbetts definiert (sie kann sowohl von oben nach unten als auch von unten nach oben weisen). Die vom Kristallbett abgetragenen Kristalle werden, gegebenenfalls nach ihrer Resuspendierung in Reinschmelze, durch Wärmeübertragung aufgeschmolzen. Ein Teil der Schmelze wird als Reinproduktstrom abgeführt und ein anderer Teil der Reinschmelze wird als Waschflüssigkeit gegen die Transportrichtung des Kristallbetts an dessen der Aufbaufront abgewandten Ende in den Prozeßraum rückgeführt. Üblicherweise weist die Waschflüssigkeit dabei Schmelzpunkttemperatur auf.

Das Aufschmelzen eines Teils der Kristalle kann aber auch unmittelbar in der Waschkolonne vorgenommen werden (z.B. über entsprechende eingebaute Vorrichtungen zum Erwärmen am der Aufbaufront abgewandten Ende des Prozeßraums)

Es wird der Kolonne dann ebenfalls nur ein Teil der erzeugten Schmelze entnommen. Der andere Teil steigt als Waschschmelze auf.

Durch die Förderung der Reinschmelze entgegengesetzt zur Förderrichtung des Kristallbetts wird das mit Mutterlauge getränkte Kristallbett praktisch in die Reinschmelze hineingedrückt und im Kristallbett die Mutterlauge durch die Reinschmelze faktisch in gewissem Umfang zurückgedrängt.

Im stationären Zustand stellt sich als Ergebnis dieses Prozesses auf einer definierten Höhe des Kristallbetts eine Waschfront ein, die als derjenige Ort des Prozessraums in der Waschkolonne definiert ist, wo die höchsten Temperatur- und Konzentrationsgradienten auftreten (in der Waschfront springt die Temperatur, oberhalb und unterhalb der Waschfront liegen im wesentlichen konstante Temperaturen vor). In der Waschfront grenzen Reinschmelze und Mutterlauge grob ausgedrückt aneinander. Der Bereich von der Waschfront bis zur Aufbaufront wird als Mutterlaugenzone bezeichnet und der Bereich von der Waschfront bis zum der Aufbaufront abgewandten Ende des Kristallbetts wird als Reinschmelzezone bezeichnet. Die Position der Waschfront kann durch Regelung von transportiertem Kristallmassenstrom und entgegengeführtem Reinschmelzestrom eingestellt werden. Dabei gilt häufig, daß mit zunehmender Länge der Reinschmelzezone die Waschwirkung besser wird.

Die US-A-4 597 768 beschreibt ein gattungsgemäßes Verfahren, bei dem eine aus Glasringen und Ringen aus rostfreiem Stahl zusammengesetzte Waschkolonne zum Einsatz kommt.

Der Querschnitt des Prozessraums der Waschkolonne kann kreisförmig, oval oder eckig (z.B. regelmäßig vieleckig) sein. Als Material für die den Prozessraum der Waschkolonne begrenzende Wand werden in der EP-A 83463 synthetische Kunststoffe und Glas genannt. Dabei erachtet es die EP-A 83463 für eine stabile Waschfront als wesentlich, daß das vorgenannte Wandmaterial eine möglichst geringe Wärmeleitfähigkeit aufweist, um einen Wärmestrom aus dem Prozessraum der Waschkolonne heraus oder in die Waschkolonne hinein zu unterdrücken. Bereits die Wärmeleitfähigkeit von Glas erachtet die EP-A 83463 als zu hoch und empfiehlt für diesen Fall die Wandung des Prozessraums zusätzlich mittels Isoliermaterialien zu umhüllen.

Nachteilig an den vorgenannten Empfehlungen des Standes der Technik ist jedoch, daß die empfohlenen Materialien nicht einfach bearbeitbar und insbesondere im Fall von Glas nur mäßig mechanisch belastbar sind. Dies ist insbesondere dann von Nachteil, wenn die Waschkolonne einen größeren Durchmesser aufweist und/oder bei erhöhtem Druck betrieben wird.

Die Aufgabe der vorliegenden Erfindung bestand daher darin, ein wie eingangs beschriebenes Verfahren zur Verfügung zu stellen, bei dem die den Prozessraum begrenzende Wand aus Metall gefertigt ist und das dennoch in befriedigender Weise betrieben werden kann.

Als Ergebnis eingehender Forschung wurde gefunden, daß es nicht zielführend ist, der Empfehlung der EP-A 83463 zu folgen, und Wärmeströme in den Prozessraum hinein durch Isoliermaßnahmen zu unterdrücken, obgleich die Wärmeleitfähigkeit von Metallen noch ausgeprägter als diejenige von Glas ist.

Ein Hintergrund für diesen Befund ist der Sachverhalt, daß der Schmelzpunkt einer Reinsubstanz bei einer höheren Temperatur liegt, als der Schmelzpunkt derselben, jedoch Verunreinigungen enthaltenden, Substanz (Stichwort: Gefrierpunktserniedrigung). Konsequenz dieser Tatsache ist, daß die Temperatur in der Mutterlauge normalerweise unterhalb der Temperatur in der Reinschmelzezone liegt. Je nach Verunreinigungsgehalt der Mutterlauge kann diese Differenztemperatur bis zu 15°C und mehr, häufig 4 bis 10°C und nur bei geringem Verunreinigungsgehalt der Mutterlauge 2 bis 4°C betragen.

Dies führt infolge der hohen Wärmeleitfähigkeit von Metallen dazu, daß durch die den Prozessraum umhüllende Metallwand Wärme aus der bei höherer Temperatur befindlichen Reinschmelze in die bei tieferer Temperatur befindliche Mutterlaugenzone abgeleitet wird. Im Ergebnis kann es dadurch auf der Länge der Reinschmelzezone an der dem Prozessraum zugewandten Seite der Metallwand zu unerwünschter Kristallbildung kommen, was den Durchsatz durch die Waschkolonne infolge erhöhter Reibungsverluste mindert oder den Druckverlust erhöht. Isoliermaßnahmen gemäß der EP-A 83463 können den Effekt verstärken.

Als Lösung der gestellten Aufgabe wird daher ein Verfahren zum reinigenden Abtrennen von Kristallen aus ihrer Suspension in Mutterlauge, bei dem
- die Suspension einer Waschkolonne zugeführt wird, die eine Wand aufweist, welche einen Prozessraum umhüllt,
- unter Zurückhaltung der Kristalle und unter Ausbildung eines Kristallbetts im Prozessraum aus der in den Prozessraum geführten Suspension Mutterlauge aus dem Prozessraum abgegeben wird,
- das Kristallbett im Prozeßraum gefördert wird,
- im Prozeßraum in die Förderrrichtung des Kristallbetts wenigstens eine von der Gravitation verschiedene Kraft wirkt, die das Kristallbett im Prozeßraum fördert,
- im Prozeßraum im Gegenstrom zum Kristallbett aus aufgeschmolzenen und nach dem erfindungsgemäßen Verfahren reinigend abgetrennten Kristallen bestehende Reinschmelze so geführt wird, daß sich im Kristallbett eine Waschfront ausbildet, die das Kristallbett in eine Mutterlaugezone und in eine Reinschmelzezone aufteilt,
zur Verfügung gestellt, bei dem die Wand eine Metallwand ist, die auf ihrer vom Prozeßraum abgewandten Seite wenigstens auf der Länge der Reinschmelzezone beheizt wird.

Beheizen meint dabei, daß die Temperatur der Kontaktumgebung der Metallwandlänge auf der vom Prozeßraum abgewandten Seite höher ist, als die Temperatur der Kontaktumgebung der Metallwandlänge auf der in den Prozeßraum gerichteten Seite, so daß ein Wärmestrom von außen nach innen fließt. Letztere Temperatur ist auf der Länge der Reinschmelzezone normalerweise die Schmelztemperatur der Reinschmelze.

Als Metalle können je nach zu reinigender Substanz Metalle unterschiedlicher Art verwendet werden. Dabei kann es sich um Reinmetalle, aber auch um Legierungen, z.B. Kohlenstoffstähle, Eisenbasislegierungen (Edelstahl, z.B. mit Cr/Ni-Zumischung) oder um Nickelbasislegierungen (z.B. Hastelloy Qualitäten), handeln. Handelt es sich bei der reinigend abzutrennenden Substanz um Acrylsäure, wird als Wandmaterial Edelstahl, insbesondere Edelstahl 1.4571, bevorzugt. Die Stärke der den Prozeßraum begrenzenden Metallwand beträgt in zweckmäßiger Weise 3 bis 30 mm, häufig 4 bis 20 mm und meist 5 bis 15 mm. Letzteres gilt insbesondere im Fall von Edelstahl.

Erfindungsgemäß bevorzugt werden Waschkolonnen mit zylindrischem Prozeßraum angewendet. Ihr Durchmesser beträgt in der Regel ≥ 25 cm, meist ≥ 50 cm. Üblicherweise wird der Durchmesser 3 m nicht übersteigen. Anwendungstechnisch zweckmäßig sind Durchmesser von 1 m bis 2 m.

Erfindungsgemäß bevorzugt werden im übrigen hydraulische Waschkolonnen angewendet, wie sie in der DE-A 10156016, der DE-A 10017903, der DE-A 10036880 und der DE-A 10036881 beschrieben sind.

Im Rahmen des erfindungsgemäßen Vergleichs ist es nicht von Nachteil, wenn die Metallwand auf ihrer vom Prozeßraum abgewandten Seite zusätzlich auch auf der Länge der Mutterlaugezone beheizt wird.

Eine besonders einfache Realisierung der erfindungsgemäßen Verfahrensweise ist daher dadurch möglich, daß die Waschkolonne als solche umhaust und die zwischen Umhausung und Metallwand befindliche Luft mittels einer Beheizung auf einer Temperatur gehalten wird, die oberhalb der Temperatur des Schmelzpunktes der der Waschkolonne entnommenen Reinschmelze liegt. Als Material für die Umhausung der Waschkolonne kann im einfachsten Fall Holz verwendet werden. Andere Materialien wie Kunststoff, Blech, Mauerwerk oder Beton sind auch möglich.

Üblicherweise ist für die Zwecke des erfindungsgemäßen Verfahrens ein Temperaturunterschied zwischen Schmelzpunkt der entnommenen Reinschmelze und Gastemperatur (z.B. Lufttemperatur) in der umgebenden Umhausung von 0,5 °C bis 5 °C ausreichend. Dieser Temperaturunterschied kann aber auch bis zu 20 °C oder mehr betragen.

Der über die Metallwand in den Prozeßraum der Waschkolonne eingetragene spezifische Wärmestrom sollte jedoch nicht mehr als 500 W/m² betragen. Wird diese Grenze überschritten, wird es in der Regel zu unerwünschten Schmelzvorgängen kommen, die die reinigende Wirkung des erfindungsgemäßen Verfahrens mindern. D.h., der oben genannte Temperaturunterschied sollte normalerweise 80 °C, meist 50 °C und in der Regel 30 °C nicht überschreiten Erfindungsgemäß günstig sind spezifische Wärmeströme bis zu 200 W/m², vorzugsweise 10 bis 100 W/m² und ganz besonders bevorzugt 10 bis 50 W/m² (jeweils wenigstens längs der Länge der Reinschmelzezone).

Handelt es sich bei den erfindungsgemäß abzutrennenden Kristallen um Kristalle der Acrylsäure, haben sich Lufttemperaturen in der Umhausung der aus Edelstahl gefertigten Waschkolonne von 14 bis 35 °C, häufig 14 bis 25 °C, teilweise 14 bis 20 °C als günstig erwiesen, wenn der Schmelzpunkt der Reinschmelze bei etwa 13 °C lag.

Die erfindungsgemäß erforderliche Beheizung kann aber auch dadurch erfolgen, daß man die Waschkolonne auf einem bestimmten Teil der Prozeßraumlänge (wenigstens auf der Länge der Reinschmelzezone) mit einem Doppelmantel, oder einer Halbrohrschlange, oder aufgelegten Begleitheizungsschläuchen oder -leitungen ausstattet und in diesen eine temperierbare Flüssigkeit oder ein temperiertes Gas führt.

Alternativ kann auch eine elektrische Beheizung (z.B. Heizdrähte oder Heizmatten) angewandt werden. D.h., die den Prozeßraum begrenzende Metallwand ist im Fall einer Doppelmantelausführung auf einer bestimmten Länge von einer zweiten Wand umgeben (die zweckmäßigerweise aus dem gleichen Material besteht aber nicht bestehen muß) und im Zwischenraum wird die Temperierflüssigkeit oder das Temperiergas geführt. Werden Temperierflüssigkeiten verwendet, so sollte deren Temperatur im Normalfall nicht mehr als 10 °C, in der Regel nicht mehr als 5 °C oberhalb der Schmelztemperatur der Reinschmelze liegen. Bei Gasen gilt das oben Gesagte. Bei hydraulischen Waschkolonnen kann es zweckmäßig sein, die Prozeßraumwand auf ihrer Länge beginnend auf der Höhe des Kristallabtragmessers bis zur Höhe des Beginns oder des Endes der Filter zu beheizen.

Es kann auch zweckmäßig sein, auf dieser Länge mit einer Flüssigkeit zu beheizen und auf der Restlänge des Prozeßraums ein Gas zur Temperierung einzusetzen. Selbstverständlich kann aber auch jede andere Zweizonenbeheizung angewendet werden.
Günstig ist das erfindungsgemäße Verfahren insbesondere im Fall von Waschkolonnen, deren Abtrennleistung ≥ 0,5 Tonnen/h, bevorzugt ≥ 1 Tonne/h beträgt. In der Regel wird die Abtrennleistung nicht mehr als 15 Tonnen/h betragen. Typische Werte liegen bei 2 bis 10 Tonnen/h. In den Figuren 1 bis 4 haben die Ziffern die nachfolgende Bedeutung:
- 1:: Suspension
- 2:: Restschmelze (Mutterlauge)
- 3:: Produkt (geschmolzenes Reinkristallisat)
- 4:: Unreine Restschmelze
- 5:: Bewegtes Kristallbett
- 6:: Waschflüssigkeit(schmelze)
- 7:: Waschkolonne
- 8:: Suspensionspumpe
- 9:: Wärmeübertrager zum Schmelzen der Kristalle
- 10:: Regelventil zum Einstellen des Mengenverhältnisses Waschflüssigkeit (schmelze) /Produkt
- 11:: Umlaufpumpe des Schmelzkreislaufs
- 12:: Schmelzkreislauf
- 13:: Rührer
- 14:: Filterrohr
- 15:: Filter
- 16:: Rotierendes Messer zur Resuspendierung der gewaschenen Kristalle
- 17:: Oszillierender Kolben mit filtrierender Stirnfläche und
- 18:: Restschmelzeablauf Schrägblattrotor für den Transport des Kristallbetts
- 19:: Zylindrischer Verdränger

Erfindungsgemäß können auch gepulste Waschkolonnen eingesetzt bzw. die Waschkolonne mit pulsierenden Strömen betrieben werden, wie es die EP-A 97405 beschreibt. Das erfindungsgemäße Verfahren eignet sich, wie bereits erwähnt, insbesondere zum reinigenden Abtrennen von Acrylsäurekristallen aus ihrer Suspension in verunreinigten Acrylsäureschmelzen, wie sie in der WO-0177056 beschrieben sind.

Das sind Suspensionen, die z.B. durch Suspensionskristallisation von Rohacrylsäuren erhältlich sind, die
≥ 70 Gew.-% Acrylsäure,
bis zu 15 Gew.-% Essigsäure,
bis zu 5 gew.-% Propionsäure,
bis zu 5 Gew.-% niedermolekulare Aldehyde,
bis zu 3 Gew.-% Polymerisationsinhibitoren und
bis zu 5 gew.-% Acrylsäure - Oligomere (Michael-Addukte)
enthalten.

Das erfindungsgemäße Verfahren eignet sich aber auch im Fall anderer Kristallsuspensionen, wie sie z.B. in der EP-A 97405 mit Xylolkristallsuspensionen beschrieben sind.
Günstig ist es auch im Fall von N-Vinylpyrrolidon- und Methacrylsäurekristallsuspensionen.

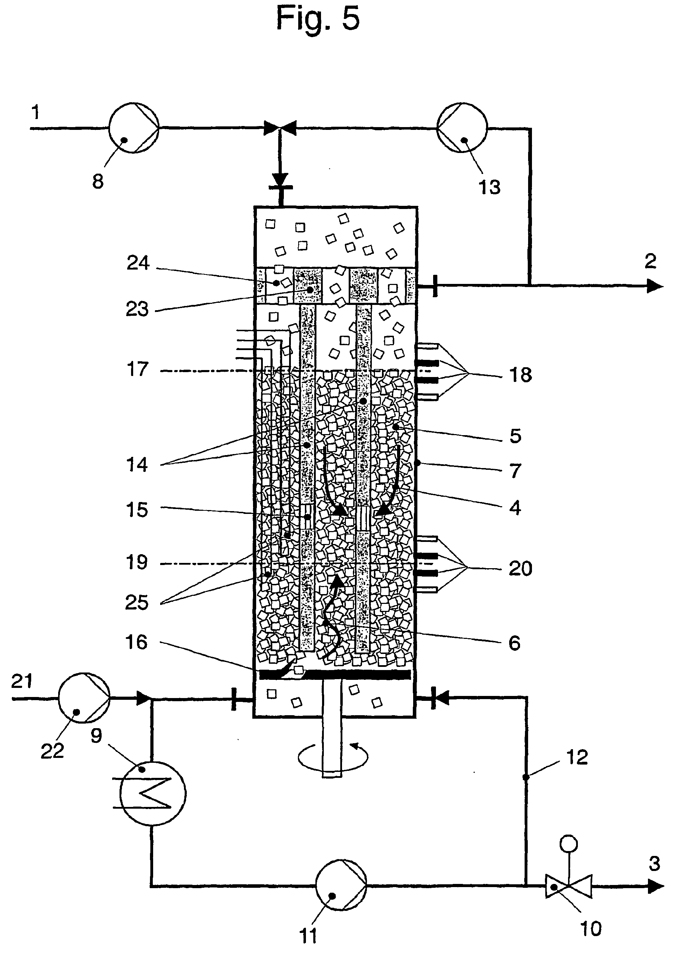

Die dieser Schrift beiliegende Figur 5 zeigt schematisch den Aufbau einer für das erfindungsgemäße Verfahren in typischer Weise geeigneten hydraulischen Waschkolonne. Sie wird nachfolgend am Beispiel einer reinigenden Abtrennung von Acrylsäurekristallen näher erläutert.

Die aus dem Suspensionskristallisator abgezogene Suspension (1) von Acrylsäurekristallen in Mutterlauge wird mittels einer Pumpe (8) und/oder über hydrostatische Höhe unter überatmosphärischem Druck in die Waschkolonne (7) eingespeist. Im oberen Teil der Waschkolonne ist ein Fluidregister angeordnet, das zwei Funktionen erfüllt. Über Durchgangsöffnungen (24) vom oberen zum unteren Kolonnenteil wird die Suspension über den Querschnitt der Waschkolonne verteilt. Der zusammenhängende Innenraum des Fluidregisters (23) dient als Sammler für die abgeführten Flüssigkeiten (Mutterlauge und Waschflüssigkeit (2)). Unten sind am Fluidregister Drainagerohre (14) angebracht (sie weisen innerhalb der Konzentrierungszone einen konstanten Querschnitt auf; das ist aus Sicht der Suspensionszufuhr die Zone bis zum ersten Filter), die mit dem Innenraum (23) verbunden sind. Die Drainagerohre sind in einer definierten Höhe mit wenigstens je einem herkömmlichen Filter (15) versehen, durch das die Mutterlauge (4) aus der Waschkolonne abgeführt wird (dabei kann die Mutterlauge unter Normaldruck, Überdruck oder unter reduziertem Druck stehen). Es bildet sich ein kompaktes Kristallbett (5) aus. Das Kristallbett wird durch die aus dem hydraulischen Strömungsdruckverlust der Mutterlauge resultierende Kraft an den Filtern vorbei in die Waschzone unterhalb der Filter transportiert. Die Rückführung eines Teils der Mutterlauge in die Kolonne mittels der Steuerstrompumpe (13) ermöglicht die Regelung dieser Transportkraft. Schwankungen des Kristallgehalts in der zugeführten Suspension oder Änderungen der Kristallgrößenverteilung, die wesentlich den Strömungsdruckverlust beeinflusst, können dadurch kompensiert werden. Erkennbar sind solche Schwankungen durch die Lageänderung der Filtrationsfront (17), die mit optischen Positionsdetektoren (18) bestimmt werden kann.

Am unteren Ende der Waschkolonne werden die Kristalle mittels eines Rotormessers (16) vom Kristallbett abgetragen und in Reinproduktschmelze, die mit p-Methoxyphenol (MEHQ) als Polymerisationsinhibitor überinhibiert sein kann, resuspendiert. Diese Suspension wird in einem Schmelzkreislauf (12) über einen Wärmetauscher (9) geführt, über den auf indirektem Weg die zum Schmelzen der Kristalle erforderliche Wärme eingetragen wird. Etwa 70 bis 80 Gew.-%, in günstigen Fällen (z.B. bei ausgeprägter Rekristallisation) sogar > 80 bis 100 Gew.-% der geschmolzenen Kristalle werden als Reinprodukt (3) aus dem Schmelzkreislauf abgeführt. Die Einstellung der entnommenen Menge an Reinprodukt erfolgt über das Produktregelventil (10). Der verbleibende Teil der Reinproduktschmelze strömt als Waschmittel (6) entgegen der Transportrichtung des Kristallbettes zu den Filtern (15), wodurch in der Waschzone eine Gegenstromwäsche der Kristalle erfolgt. Die Reinigung der Kristalle beruht im wesentlichen auf der Verdrängung und Verdünnung der Mutterlauge in den Zwickeln des Kristallbettes durch Waschflüssigkeit. Der Verdünnungseffekt beruht hierbei auf Vermischung in den durchströmten Zwickeln zwischen den Kristallen und Diffusion in den nicht durchströmten Kontaktstellen, bzw. der oberflächennahen Strömungsgrenzschicht der Kristalle.

Bei stationärem Betrieb stellt sich in einer definierten Höhe in der Waschzone die Waschfront (19) ein. Auf der Höhe der Waschfront findet der Konzentrationsübergang von Mutterlaugenkonzentration (oberhalb der Waschfront) und Reinschmelzekonzentration (unterhalb der Waschfront) statt. Die Waschfront (19) muß zur Erzielung einer adäquaten Reinigungswirkung in einer Mindesthöhe oberhalb des Rotormessers (16) positioniert sein. Die Position (19) stellt sich als dynamisches Gleichgewicht aus transportiertem Kristallmassenstrom (5) und entgegengeführtem Waschmittelstrom (6) ein und liegt unterhalb der Filter. Die Waschmittelmenge resultiert aus der abgeführten Menge an Reinprodukt.

Bei bereits vergleichsweise guter Reinheit der Rohacrylsäure liegt die Kristallisationstemperatur im Suspensionskristallisator lediglich 1 bis 4 °C unterhalb des Reinprodukt-Schmelzpunktes. Im Bereich der Waschfront kommt es daher beim Temperaturausgleich der kalten Kristalle mit der Waschflüssigkeit nur in geringem Umfang zur Rekristallisation der Waschflüssigkeit. Dies begrenzt die Wiedergewinnung an Waschschmelze durch Rekristallisation ebenso wie die Minderung der Porosität des Kristallbettes unterhalb der Waschfront durch Rekristallisation. Eine solche geringe Kristallbettporosität würde den Waschmittelaufwand ebenso verringern wie eine Wiedergewinnung durch Rekristallisation.

Bei guter Reinheit der Rohacrylsäure ist es ferner zweckmäßig, bereits in den Schmelzkreis (12) der Waschkolonne den Lagerstabilisator Methoxyphenol (MEHQ) einzuspeisen. Dazu wird das MEHQ in Reinprodukt gelöst mit einer Dosierpumpe (22) in den bei Schmelztemperatur liegenden Schmelzkreis zur Stabilisierung desselben gegeben.

Zur Gewährleistung eines stabilen Betriebs der hydraulischen Waschkolonne im Sinne einer definierten Raum-Zeit-Ausbeute und einer konstant guten Reinigungswirkung ist die Kompensation äußerer Störgrößen wie
- Schwankungen der Suspensionsmenge,
- Änderung des Kristallgehalts in der Suspension,
- Variation der Kristallgrössenverteilung und
- Konzentrationsschwankungen im Feed und/oder der Mutterlauge durch die Regelung

a) der Filtrationsfront (Fig. 5, Ziffer 17),
b) der spezifischen Waschmittelmenge (Fig. 5, Ziffer 6) und
c) der Schmelzwärme (Fig. 5, Ziffer 9) zweckmäßig.

Im übrigen haben die Ziffern der Figur 5 die nachfolgende Bedeutung:
- 1 =: Zufuhr der Kristallisatsuspension
- 2 =: Mutterlaugeentnahme
- 3 =: Reinproduktacrylsäure
- 4 =: interner Mutterlaugestrom
- 5 =: bewegtes Kristallbett
- 6 =: Waschschmelze
- 7 =: Waschkolonne
- 8 =: Suspensionspumpe
- 9 =: Wärmeübertrager zum Schmelzen der Kristalle
- 10 =: Regelventil zur Einstellung des Mengenverhältnisses Waschschmelze/Reinproduktacrylsäure-Entnahme
- 11 =: Umlaufpumpe des Schmelzkreislaufs
- 12 =: Schmelzkreislauf
- 13 =: Steuerstrompumpe
- 14 =: Drainagerohr für Mutterlauge und Waschflüssigkeit
- 15 =: Filter
- 16 =: Rotormesser zur Resuspendierung der gewaschenen Kristalle
- 17 =: Filtrationsfront (Obergrenze Kristallbett)
- 18 =: Detektion der Filtrationsfront (4 optische Remissionssensoren)
- 19 =: Waschfront (Konzentrationsübergang reine-unreine Flüssigphase)
- 20 =: Detektion der Waschfront (4 optische Remmissionssensoren)
- 21 =: Inhibitorlösung (MEHQ in Reinproduktacrylsäure)
- 22 =: Dosierpumpe für die Inhibitorlösung
- 23 =: Fluidregister: Sammelboden für Mutterlauge und Waschflüssigkeit
- 24 =: Fluidregister: Verteilerboden für die Kristallisatsuspension
- 25 =: Detektion der Waschfront (4 Temperaturfühler)

### Beispiele und Vergleichsbeispiele

### Beispiel 1

Durch fraktionierende Kondensation eines Produktgasgemisches einer zweistufigen heterogen katalysierten Gasphasenpartialoxidation von Popen wurden im Seitenabzug einer fraktionierenden Kondensationskolonne pro Stunde 1,5 t einer Rohacrylsäure der folgenden Zusammensetzungsgehalte abgezogen:

| | | |
|---|---|---|
| Acrylsäure | 96,1 | Gew.-% |
| Acrolein | 446 | Gew.ppm |
| Allylacrylat | 20 | Gew.ppm |
| Diacrylsäure | 3764 | Gew.ppm |
| Essigsäure | 7460 | Gew.ppm |
| Furfural | 6719 | Gew.ppm |
| Benzaldehyd | 7131 | Gew.ppm |
| Propionsäure | 751 | Gew.ppm |
| Phenothiazin | 91 | Gew.ppm |
| MEHQ | 247 | Gew.ppm |
| Wasser | 0,83 | Gew.-% |

Durch kontinuierliche Zugabe von 22,5 kg/h Wasser zu der Rohacrylsäure wurde deren Wassergehalt auf 2,3 Gew.-% erhöht und anschließend mit einer Temperatur von 20 °C einem Suspensionskristallisator zugeführt. Als Kristallisator wurde ein Kühlscheibenkristallisator (Hersteller: Firma GMF, Niederlande) mit 7 Kühlscheiben mit einem Durchmesser von 1,25 m und einem Fassungsvermögen von etwa 2500 1 eingesetzt. Als Kühlmittel wurde ein Wasser/Glykol-Gemisch (70/30 Vol.-%) durch die Kühlscheiben gefahren. Die Schmelze wurde beim Durchgang durch den Kristallisator auf 8 °C abgekühlt, wobei, bezogen auf die Suspensionsgesamtmasse, etwa 24 gew.-% Kristalle entstanden.

Ein Teil dieser Suspension wurde kontinuierlich über eine Kreiskolbenpumpe (drehzahlgeregelt) auf eine hydraulische Waschkolonne gefahren. Diese Waschkolonne wies einen zylindrischen Prozeßraum mit 263 mm Innendurchmesser auf und besaß eine den Prozeßraum begrenzende Metallwand aus Edelstahl 1.4571 mit 5 mm Wandstärke. Zum Flüssigkeitsabzug wurde in der Waschkolonne ein zentral eingebautes Filterrohr (aus demselben Edelstahl) mit einem Außendurchmesser von 48 mm verwendet (Wanddicke = 2 mm). Die Länge des Prozeßraums betrug 1230 mm. Die Länge des Filterrohrs betrug 1225 mm. Die Filterlänge betrug 60 mm. Das Filter war nach einer Rohrlänge von 970 mm(von oben gemessen) eingebaut. Der Kristallabtrag am unteren Ende der Waschkolonne erfolgte mit einem rotierenden Messer (60 Umdrehungen/Minute). Die Transportrichtung war von oben nach unten.

Die abgetragenen Kristalle wurden in einem Schmelzkreis, der bei 14 °C (Schmelzpunkt der reinigend abgetrennten Kristalle) betrieben wurde, resuspendiert. Dabei wurden als Polymerisationsinhibitoren MEHQ und Luft (durch Einperlung) in die im Kreis geführte Suspension eingebracht (278 Gew.ppm MEHQ). Über einen Wärmetauscher wurde auf indirekten Weg Wärme in die im Kreis gefahrene Suspension eingetragen, um die darin resuspendierten Kristalle weitgehend aufzuschmelzen. Als Pumpe im Schmelzkreis wurde eine Kreiselpumpe (1500 U/min) mit doppeltwirkender Gleitringdichtung verwendet. Als Sperrflüssigkeit kam eine Wasser/Glykol-Mischung (85/15 Vol.-%) zum Einsatz, die indirekt mit Kühlwasser gekühlt wurde. Um einen besseren Acrylsäureaustausch im Bereich der Gleitringdichtung dieser Pumpe zu erhalten, wurde eine Spülleitung von der Druckseite der Pumpe auf den die Gleitringdichtung umgebunden Produktraum gezogen und kontinuierlich offen betrieben. Die Lage der Waschfront in der Kolonne wurde durch mehrere, axial auf unterschiedlicher Höhe in der Waschkolonne eingebaute, Temperaturmessungen überwacht und unter Anpassung der aus dem Schmelzkreis abgezogenen Reinproduktmenge geregelt. Die Kontrolle der Kristallbetthöhe erfolgte über vier optische, axial auf unterschiedlicher Höhe an der Waschkolonnenwand angebrachte Sensoren und unter Anpassung der Steuerstrommenge. Als Steuerstrompumpe kam ebenfalls eine Kreiskolbenpumpe (drehzahlgeregelt) zum Einsatz, es hätte aber auch eine Kreiselpumpe mit einem Regelventil verwendet werden können.

Die Waschkolonne wurde in einer aus Holzplatten hergestellten Umhausung untergebracht, wobei die zwischen Kolonnenmetallwand und Holzwand befindliche Luft mit einer Beheizung so temperiert wurde, daß die Lufttemperatur in der gesamten Behausung im Bereich von 15 °C bis 18 °C lag (gemessen an zehn repräsentativen Meßpunkten).

Die Waschkolonne wurde mit einer Suspensionsmenge von 1400 kg/h aus dem Kühlscheibenkristallisator beschickt. Die Temperatur der Suspension lag bei 8 °C. Es stellte sich ein Überdruck gegen Atmosphäre am Kopf der Waschkolonne von 2,0 bis 2,2 bar ein, der eng begrenzt um den Mittelwert von 2,05 bar schwankte. Der Überdruck am unteren Ende der Kolonne betrug 1,8 bis 2,0 bar. Über eine Steuerstrompumpe wurde eine Steuerstrommenge von 1400 kg/h auf die Waschkolonne zurückgefahren, um die Kristallbetthöhe einzustellen.

Der aus dem Schmelzkreis abgezogene Reinproduktstrom an gereinigter Acrylsäure lag bei 310 bis 340 kg/h (d.h., im Mittel = 325 kg/h). Dies entspricht einer Ausbeute von 96,7 Gew.-%, bezogen auf den der Waschkolonne mit der Suspension zugeführten Kristallmassenstrom. Das Reinprodukt wies folgende Zusammensetzungsgehalte auf:

| | |
|---|---|
| Acrylsäure | 99,75 Gew.-% |
| Acrolein | nicht nachweisbar |
| Allylacrylat | nicht nachweisbar |
| Essigsäure | 1457 Gew.ppm |
| Furfural | 3 Gew.ppm |
| Benzaldehyd | 2 Gew.ppm |
| Propionsäure | 209 Gew.ppm |
| Phenothiazin | nicht nachweisbar |
| MEHQ | 278 Gew.ppm |
| Wasser | < 0,05 Gew.-% |

Die Waschfront war während des gesamten Versuchs von befriedigender Stabilität.

### Vergleichsbeispiel 1

Es wurde wie in Beispiel 1 verfahren. Die Lufttemperatur in der Behausung lag jedoch im Bereich zwischen 9 und 11 °C. Zunächst wurde die Waschkolonne ebenfalls mit einer Kristallsuspensionsmenge von 1400/kg/h und einer Steuerstrommenge von 1400 kg/h beschickt. Mit zunehmender Betriebsdauer stellte sich ein zunehmend ansteigender Überdruck am Kopf der Waschkolonne von 4,1 bar (nach 2,5 h) ein. Der Überdruck am unteren Ende der Waschkolonne stieg bis auf 2,7 bar an. Dabei fiel die unter Aufrechterhaltung der Position der Waschfront abgezogene Reinproduktmenge im Mittel auf 307 kg/h. Dies entspricht einer Ausbeute von 91,4 Gew.-%, bezogen auf den der Waschkolonne mit der Suspension zugeführten Kristallmassenstrom.

Um den Druckanstieg in der Waschkolonne zu begrenzen wurde die zugeführte Kristallsuspensionsmenge auf 1300 kg/h gesenkt und die Steuerstrommenge auf 1475 kg/h erhöht (um die Länge des Kristallbetts zu verringern). Die Überdrucke fielen zunächst ab, um dann erneut (trotz reduzierter Belastung) wieder bis auf 3,5 bar (oben) und 2,5 bar (unten) anzusteigen.

Unter Aufrechterhaltung der Position der Waschfront sank die Entnahmemenge an Reinprodukt im Mittel auf ca. 290 kg/h. Die Produktreinheit war im wesentlichen unverändert.

Durch Erhöhung der Lufttemperatur in der Behausung auf die Werte gemäß Beispiel 1 konnten die Arbeitsdrucke in der Waschkolonne auf das Niveau gemäß Beispiel 1 rückgeführt und die Reinproduktentnahmemenge auf Werte über 325 kg/h angehoben werden.

### Beispiel 2

Durch fraktionierende Kondensation eines Produktgasgemisches einer zweistufigen heterogen katalysierten Gasphasenpartialoxidation von Propen wurden im Seitenabzug einer fraktionierenden Kondensationskolonne pro Stunde 1,5 t einer Rohacrylsäure der folgenden Zusammensetzung abgezogen:

| | | |
|---|---|---|
| Acrylsäure | 96,72 | Gew.-% |
| Acrolein | 390 | Gew.ppm |
| Allylacrylat | 19 | Gew.ppm |
| Diacrylsäure | 3602 | Gew.ppm |
| Essigsäure | 6873 | Gew.ppm |
| Furfural | 6436 | Gew.ppm |
| Benzaldehyd | 6264 | Gew.ppm |
| Propionsäure | 718 | Gew.ppm |
| Phenothiazin | 80 | Gew.ppm |
| MEHQ | 239 | Gew.ppm |
| Wasser | 0,82 | Gew.-% |

Durch kontinuierliche Zugabe von 15 kg/h Wasser zu der Rohacrylsäure wurde deren Wassergehalt auf 1,7 Gew.-% erhöht und anschließend mit einer Temperatur von 19 °C dem Suspensionskristaller aus Beispiel 1 zugeführt. Die Schmelze wurde beim Durchgang durch den Kristallisator auf 8,4 °C abgekühlt, wobei, bezogen auf die Suspensionsgesamtmasse, etwa 27 Gew.-% Kristalle entstanden.

Ein Teil dieser Suspension wurde kontinuierlich über eine Kreiskolbenpumpe (drehzahlgeregelt) auf eine hydraulische Waschkolonne derselben Größe und desselben Prozeßraumwandmaterials wie in Beispiel 1 gefahren. Die Waschkolonne war aber im Gegensatz zu Beispiel 1 mit sechs Filterkerzen (Außendurchmesser jeweils = 34 mm) und mit einem Doppelmantel (aus demselben Material wie die Prozeßraumwand) ausgestattet, der sich von der Höhe des Kristallabtragmessers bis auf die Höhe der Filter erstreckte. Der Doppelmantelraum diente dem Zweck des Beheizens mittels einer temperierbaren Wasser/Glykol-Mischung (70/30 Vol.-%) in diesem Bereich. Oberhalb des Heizmantels war die Waschkolonne wie in Beispiel 1 von der Holzumhausung umgeben, deren Luftgehalt auf einer Temperatur von 15 bis 17 °C gehalten wurde.

Die Wasser/Glykol-Mischung wurde mit einer Temperatur von 15 °C und in einer Menge von 1,6 m³/h auf den Heizmantel gefahren. Die Waschkolonne wurde mit einer Kristallsuspensionsmenge von 1400 kg/h aus dem Kühlscheibenkristallisator beschickt.

Es stellte sich am Kopf der Waschkolonne gegen Atmosphäre ein Überdruck von 2,2 bis 2,5 bar ein. Der Überdruck am unteren Ende der Kolonne betrug 1,9 bis 2,1 bar. Es wurde eine Steuerstrommenge von 1600 kg/h über die Steuerstrompumpe auf die Waschkolonne zurückgefahren, um die Kristallbetthöhe einzustellen. Aus dem Schmelzkreis, der wie in Beispiel 1 betrieben wurde, wurde ein Reinproduktstrom von im Mittel 368 kg/h an gereinigter Acrylsäure abgezogen, was einer Ausbeute von 97,4 %, bezogen auf den der Waschkolonne mit der Suspension zugeführten Kristallmassenstrom, entspricht. Das Reinprodukt hatte dabei folgende Zusammensetzung:

| | |
|---|---|
| Acrylsäure | 99,75 Gew.-% |
| Acrolein | nicht nachweisbar |
| Allylacrylat | nicht nachweisbar |
| Essigsäure | 1420 Gew.ppm |
| Furfural | 2 Gew.ppm |
| Benzaldehyd | 2 Gew.ppm |
| Propionsäure | 215 Gew.ppm |
| Phenothiazin | nicht nachweisbar |
| MEHQ | 236 Gew.ppm |
| Wasser | <0,06 Gew.-% |

### Vergleichsbeispiel 2

Wie Beispiel 2, die Temperatur der Wasser/Glykol-Mischung wurde jedoch auf 12 °C gehalten. Es traten die gleichen Probleme wie in Vergleichsbeispiel 1 auf.

### Vergleichsbeispiel 3

Wie Beispiel 2, der Doppelmantelraum wurde jedoch weitgehend evakuiert.
Es traten die gleichen Probleme wie im Vergleichsbeispiel 1 auf.

## Patentansprüche

1. Verfahren zum reinigenden Abtrennen von Kristallen aus ihrer Suspension in Mutterlauge, bei dem
- die Suspension einer Waschkolonne zugeführt wird, die eine Wand aufweist, welche einen Prozessraum umhüllt,
- unter Zurückhaltung der Kristalle und unter Ausbildung eines Kristallbetts im Prozessraum aus der in den Prozeßraum geführten Suspension Mutterlauge aus dem Prozeßraum abgegeben wird,
- das Kristallbett im Prozeßraum gefördert wird,
- im Prozeßraum in die Förderrichtung des Kristallbetts wenigstens eine von der Gravitation verschiedene Kraft wirkt, die das Kristallbett im Prozeßraum fördert,
- im Prozeßraum im Gegenstrom zum Kristallbett aus aufgeschmolzenen und nach dem beanspruchten Verfahren reinigend abgetrennten Kristallen bestehende Reinschmelze so geführt wird, daß sich im Kristallbett eine Waschfront ausbildet, die das Kristallbett in eine Mutterlaugenzone und in eine Reinschmelzezone aufteilt, wobei
- die Wand eine Metallwand ist, die auf ihrer vom Prozeßraum abgewandten Seite wenigstens auf der Länge der Reinschmelzezone beheizt wird.

2. Verfahren nach Anspruch 1, **dadurch gekennzeichnet, daß** es sich bei den reinigend abzutrennenden Kristallen um Kristalle der Acrylsäure, des Xylols, der Methacrylsäure oder des N-Vinylpyrrolidons handelt.

3. Verfahren nach Anspruch 1 oder 2, **dadurch gekennzeichnet, daß** die Metallwand aus Edelstahl, Kohlenstoffstahl oder einer Nickelbasislegierung gefertigt ist.

4. Verfahren nach einem der Ansprüche 1 bis 3, **dadurch gekennzeichnet, daß** die Waschkolonne eine hydraulische Waschkolonne ist.

5. Verfahren nach einem der Ansprüche 1 bis 4, **dadurch gekennzeichnet, daß** die Beheizung **dadurch** realisiert wird, daß man die Waschkolonne einhaust und das in der Einhausung befindliche Gas auf einer Temperatur hält, die oberhalb der Reinschmelzetemperatur liegt.

6. Verfahren nach einem der Ansprüche 1 bis 5, **dadurch gekennzeichnet, daß** über die Beheizung ein spezifischer Wärmestrom von 10 bis 100 W/m² in die Reinschmelzezone geführt wird.

## Claims

1. A process for purifying removal of crystals from their suspension in mother liquor, in which
- the suspension is fed to a washing column which has a wall which encloses a process chamber,
- mother liquor from the suspension fed into the process chamber is passed out of the process chamber while holding back the crystals and forming a crystal bed in the process chamber,
- the crystal bed is conveyed within the process chamber,
- at least one force other than gravity acts in the process chamber in the conveying direction of the crystal bed and conveys the crystal bed within the process chamber,
- pure melt comprising molten crystals which have been purifyingly removed by the process claimed is conducted in the process chamber in countercurrent to the crystal bed in such a manner that a washing front forms in the crystal bed which divides the crystal bed into a mother liquor zone and a pure melt zone,
- the wall being a metal wall which, on its side facing away from the process chamber, is heated at least along the length of the pure melt zone.

2. The process according to claim 1, wherein the crystals to be purifyingly removed are crystals of acrylic acid, xylene, methacrylic acid or N-vinylpyrrolidone.

3. The process according to claim 1 or 2, wherein the metal wall is manufactured from stainless steel, carbon steel or a nickel-based alloy.

4. The process according to any of claims 1 to 3, wherein the washing column is a hydraulic washing column.

5. The process according to any of claims 1 to 4, wherein the heating is realized by encasing the washing column and maintaining the gas in the casing at a temperature above the pure melt temperature.

6. The process according to any of claims 1 to 5, wherein the heating conducts a specific heat flux of from 10 to 100 W/m² into the pure melt zone.

## Revendications

1. Procédé de séparation pour purification de cristaux de leur suspension dans une liqueur mère, dans lequel :
- la suspension est acheminée à une colonne de lavage, qui présente une paroi enveloppant une chambre de traitement,
- la liqueur mère est évacuée de la chambre de traitement tout en retenant les cristaux et en formant un lit de cristaux dans la chambre de traitement à partir de la suspension acheminée dans la chambre de traitement,
- le lit de cristaux est acheminé dans la chambre de traitement,
- dans la chambre de traitement, au moins une force différente de la force de gravitation est exercée dans le sens de déplacement du lit de cristaux et déplace le lit de cristaux dans la chambre de traitement,
- dans la chambre de traitement, à contre-courant avec le lit de cristaux, est acheminée une masse fondue pure, constituée de cristaux fondus et de cristaux séparés pour purification selon le procédé revendiqué de sorte qu'il se forme, dans le lit de cristaux, un front de lavage, qui divise le lit de cristaux en une zone de liqueur mère et une zone de masse fondue pure, où
- la paroi est une paroi métallique, qui est, sur son côté opposé à la chambre de traitement, au moins chauffée sur la longueur de la zone de masse fondue pure.

2. Procédé selon la revendication 1, **caractérisé en ce que** les cristaux à séparer pour purification sont des cristaux d'acide acrylique, de xylène, d'acide méthacrylique ou de N-vinylpyrrolidone.

3. Procédé selon la revendication 1 ou 2, **caractérisé en ce que** la paroi métallique est fabriquée en acier fin, en acier au carbone ou en alliage à base de nickel.

4. Procédé selon l'une quelconque des revendications 1 à 3, **caractérisé en ce que** la colonne de lavage est une colonne de lavage hydraulique.

5. Procédé selon l'une quelconque des revendications 1 à 4, **caractérisé en ce que** le chauffage est effectué 'de manière à environner la colonne de lavage et à maintenir le gaz se trouvant dans l'environnement à une température qui est supérieure à la température de la masse fondue pure.

6. Procédé selon l'une quelconque des revendications 1 à 5, **caractérisé en ce que**, en plus du chauffage, on achemine un flux de chaleur spécifique de 10 à 100 W/m² dans la zone de la masse fondue pure.
